# EUROPÄISCHE PATENTSCHRIFT

(11) **EP 3 906 181 B1**
(45) Veröffentlichungstag und Bekanntmachung des Hinweises auf die Patenterteilung: **23.08.2023**
(21) Anmeldenummer: 20706983.2
(22) Anmeldetag: 14.02.2020
(51) Int. Cl.: B61D 33/00, B60N 2/56

(54) **ANORDNUNG ZUR BEHEIZUNG EINES FUSSBODENS EINES SCHIENENFAHRZEUG-INNENRAUMS**
ARRANGEMENT FOR HEATING THE FLOOR OF THE INNER CHAMBER OF A RAIL VEHICLE
ENSEMBLE POUR CHAUFFER UN PLANCHER D'UN ESPACE INTÉRIEUR DE VÉHICULE FERROVIAIRE

(30) Priorität: 19.02.2019 DE 102019202216
(43) Veröffentlichungstag der Anmeldung: 10.11.2021
(73) Patentinhaber: Siemens Mobility GmbH, 81739 München (DE)
(72) Erfinder: HILDEBRANDT, Alexander, 44789 Bochum (DE); KASAP, Irfan, 44653 Herne (DE); SCHMITZ, Markus, 52379 Langerwehe (DE)
(74) Vertreter: Siemens Patent Attorneys
(86) Internationale Anmeldenummer: PCT/EP2020/053850
(87) Internationale Veröffentlichungsnummer: WO 2020/169461

(56) Entgegenhaltungen:
- EP-A1- 2 275 304
- FR-A1- 2 967 948
- JP-A- 2015 033 894
- JP-U- H0 623 862

## Beschreibung

Die Erfindung betrifft eine Anordnung zur Beheizung eines Fußbodens eines Schienenfahrzeug-Innenraums.

Innenräume in Schienenfahrzeugen sind in verschiedene Komfortzonen aufgeteilt. Für diese Komfortzonen sind durch Norm-Vorgaben Innenraumtemperaturen festgelegt. Diese Norm-Vorgaben geben darüber hinaus auch einzuhaltende Temperaturen von Innenraum-Oberflächen vor.

Insbesondere die Einhaltung einer vorgegebenen Oberflächentemperatur im Fußbodenbereich des Innenraums stellt eine kritische Anforderung für den Heizbetrieb des Innenraums dar.

Es ist bekannt, zur Heizung bzw. Erwärmung des Fußbodens Luft-basierte bzw. Luft-gestützte Klimatisierungssysteme zu verwenden. Dabei wird dem Innenraum Heizluft über seitliche Bodenkanäle zugeführt. Die Heizluft tritt aus den Bodenkanälen aus, steigt durch die Thermik nach oben auf und heizt dabei den Fußboden indirekt mit.

Nachteilig ist hierbei, dass der Innenraum-Fußboden vergleichsweise kalt bleibt. Zusätzlich reduzieren Kaltluftströmungen, wie sie im Fahrgast-Innenraum beispielsweise beim Zusteigen von Passagieren in den Innenraum verursacht werden, eine gleichmäßige Erwärmung des Fußbodens in der Fläche. Zuletzt können benötigte Bodenkanäle aus konstruktiven Gründen nicht überall im Fahrzeuginnenraum vorgesehen werden, was die Fußbodenheizung zusätzlich erschwert.

Es ist möglich, zur Heizung bzw. Erwärmung des Innenraums Flächenheizungen einzusetzen. Diese können aus konstruktiven Gründen jedoch nicht flächig auf dem Fußboden angebracht werden. Dadurch heizen diese über den Innenraum die Fußbodenfläche indirekt mit, jedoch wird die Fußbodenfläche nicht durchgängig zur Heizung erreicht. Dadurch bilden sich beheizte und unbeheizte Fußbodensegmente aus, was eine gleichmäßige Fußbodenheizung behindert.

Es ist auch bekannt, eine elektrische Fußbodenheizung im Fahrzeugboden vorzusehen. Diese umfasst elektrisch beheizte Heizschleifen, die mäanderförmig direkt im Fußboden eingesetzt sind.

Diese Art der Heizung ist jedoch sehr ineffektiv. Rund 40% bis 60% der eingesetzten Heizenergie geht über eine äußere Fußbodenoberfläche unmittelbar an die äußere Umgebung des Fahrzeugs verloren, während entsprechend 60% - 40% der eingesetzten Heizenergie über eine innere Fußbodenoberfläche dem Fahrzeuginnenraum zu Gute kommt.

Hinzu kommt, dass Oberflächentemperaturen im Fußbodenbereich auch nach oben begrenzt sind, so dass nur eine sehr geringe Wärmeenergie dem Innenraum zugeführt werden kann.

Aus der Druckschrift JP 201533894 A ist eine Heißluftbasierte Heizung bekannt, die in einem Innenraum an einer Seitenwand des Innenraums derart befestigt ist, dass erwärmte Luft an Beine eines Fahrgastes gelangt. Durch die seitliche Befestigung der Heizung wird ermöglicht, dass ausreichend Stauraum für Gepäckstücke unter dem Sitz verfügbar ist.

Aus der Druckschrift EP 2 275 304 A1 ist Kraftfahrzeug mit einer Kopfstütze bekannt, wobei die Kopfstütze eine Heizeinrichtung beinhaltet.

Es ist die Aufgabe der vorliegenden Erfindung, eine verbesserte Anordnung zur Beheizung eines Fußbodens eines Schienenfahrzeug-Innenraums anzugeben, mit der vorgegebene Oberflächentemperaturen im Fußbodenbereich des Innenraums flächendeckend erzielt werden.

Diese Aufgabe wird durch die Merkmale des Anspruchs 1 gelöst. Vorteilhafte Weiterbildungen sind in den abhängigen Ansprüchen angegeben.

Die erfindungsgemäße Anordnung zur Beheizung eines Fußbodens eines Schienenfahrzeug-Innenraums umfasst Infrarotflächenheizstrahler, die unter Sitzen des Innenraums angeordnet sind. Die Infrarotflächenheizstrahler sind derart ausgerichtet, dass durch die abgegebene Infrarotstrahlung der Fußboden beheizt wird.

Erfindungsgemäß sind ausgewählte Infrarotflächenheizstrahler mit zugeordneten Abstandssensoren gekoppelt, die an jeweiligen Sitzen angeordnet sind.

Ein derartiger Sensor herkömmlicher Bauart wird zur Steuerung des zugeordneten Infrarotflächenheizstrahler verwendet, so dass ein Heizbetrieb unterbunden oder reduziert wird, sobald ein Gepäckstück unter den Sitz des zugeordneten Infrarotflächenheizstrahlers geschoben wird.

In einer vorteilhaften Weiterbildung sind die Infrarotflächenheizstrahler als Glaskonvektoren ausgebildet.

In einer vorteilhaften Weiterbildung sind die Infrarotflächenheizstrahler in das Design der Sitze integriert und beeinflussen damit nicht ein vorgegebenes Fahrzeuginnenraum-Design bzw. ein vorgegebenes Fahrzeuginnenraum-Konzept.

In einer vorteilhaften Weiterbildung werden die Infrarotflächenheizstrahler an der Sitzunterseite derart als Bestandteil des Sitzes integriert, dass die Infrarotflächenheizstrahler im Betrieb vom Fahrgast nicht gesehen werden.

In einer vorteilhaften Weiterbildung sind ausgewählte Infrarotflächenheizstrahler mit zugeordneten Infrarot-Temperatursensoren gekoppelt.

Ein derartiger Sensor herkömmlicher Bauart wird zur Steuerung des zugeordneten Infrarotflächenheizstrahler verwendet, so dass ein Überschreiten einer vorgegebenen Fußbodentemperatur verhindert wird bzw. eine Einhaltung einer vorgegebenen Fußbodentemperatur gewährleistet wird.

Bei der erfindungsgemäßen Anordnung stellen die Infrarotflächenheizstrahler bei geringer Baugröße eine vergleichsweise hohe Wärmeleistung kostengünstig zur Verfügung.

Bei der erfindungsgemäßen Anordnung wird die von den Infrarotflächenheizstrahlern abgegebene Strahlungswärme vom Fußboden absorbiert, so dass dieser direkt aufgeheizt wird und die Oberflächentemperatur des Bodens ansteigt.

Bei der erfindungsgemäßen Anordnung wird ein Teil der Strahlung der Infrarotflächenheizstrahler reflektiert, so dass auch umliegende Oberflächen des Innenraums sowie der Innenraum selbst indirekt geheizt werden.

Durch die erfindungsgemäße Anordnung wird eine vorgeschriebene Fußbodentemperaturen im Innenraum eines Schienenfahrzeugs definiert eingehalten.

Die Effektivität der erfindungsgemäß verwendeten Infrarotflächenheizstrahler übertrifft die Effektivität einer herkömmlichen Fußbodenheizung hinsichtlich Wärmeverlust an die Umgebung, hinsichtlich der in das Fahrzeuginnere einbringbaren Wärmeenergie und auch hinsichtlich der Kosten pro Watt Heizleistung.

Die erfindungsgemäße Anordnung ist leicht nachrüstbar, denn die im Fahrzeuginnenraum verwendeten Sitze verfügen aus verschieden Gründen bereits sowohl über eine Kabelführung als auch über eine Energieversorgung, die für die Infrarotflächenheizstrahler vorteilhaft mitbenutzt werden können.

Nachfolgend wird die vorliegende Erfindung beispielhaft anhand einer Zeichnung näher erläutert. Dabei zeigt:
- FIG 1: ein Beispiel für einen Infratrotflächenheizstrahler, wie er bei der vorliegenden Erfindung zur Anwendung kommt,
- FIG 2: ein Anwendungsbeispiel der erfindungsgemäßen Anordnung,
- FIG 3: mit Bezug auf FIG 2 ein Detail der erfindungsgemäßen Anordnung, und
- FIG 4: mit Bezug auf FIG 2 und FIG 3 ein alternatives Detail der erfindungsgemäßen Anordnung.

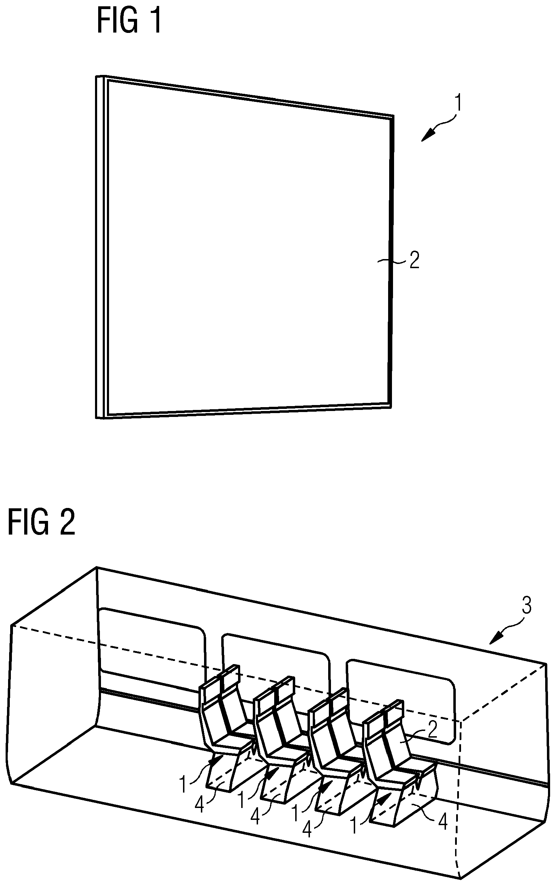

FIG 1 zeigt ein Beispiel für einen Infratrotflächenheizstrahler 1, wie er bei der vorliegenden Erfindung zur Anwendung kommt.

Der Infratrotflächenheizstrahler 1 weist eine Außenseite 2 auf, die der Farbe des Innenraums, bevorzugt weiß oder schwarz oder creme-farbig, entspricht.

FIG 2 zeigt ein Anwendungsbeispiel der erfindungsgemäßen Anordnung, bei der Infratrotflächenheizstrahler 1 integrierte Bestandteile von Sitzen 2 eines Schienenfahrzeug-Innenraums 3 ausgebildet sind.

Die Sitze 2 weisen an ihrer Unterseite Infrarotflächenheizstrahler 1 auf, die nach unten und damit in Richtung zum Fußboden ausgerichtet sind.

Gezeigt ist in FIG 2 damit entsprechend eine Abstrahlung 4 von Wärmeenergie von der Sitzunterseite zum Fußboden. Die Infrarotflächenheizstrahler 1 sind in das Design der Sitzunterseite integriert, so dass die Infrarotflächenheizstrahler 1 im Betrieb von einem Fahrgast nicht gesehen werden.

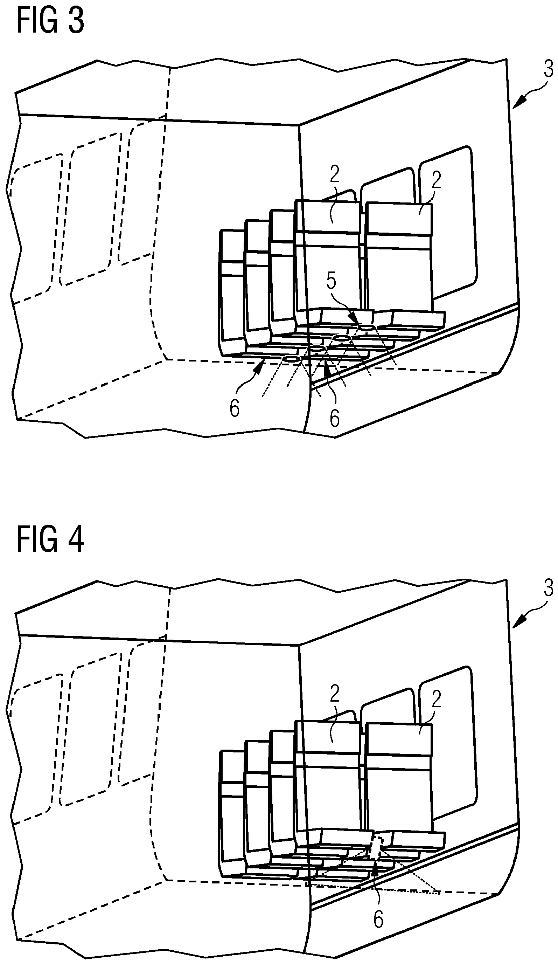

FIG 3 zeigt mit Bezug auf FIG 2 ein Detail der erfindungsgemäßen Anordnung.

Die beiden Infrarotflächenheizstrahler (1, hier nicht gezeigt) zweier benachbarter Sitze 2 sind mit einem zugeordneten Infrarot-Temperatursensor 5 gekoppelt. Der Infrarot-Temperatursensor 5 ist messtechnisch in Richtung des Fußbodens ausgerichtet.

Der Infrarot-Temperatursensor 5 ist mittig zwischen den beiden benachbarten Sitzen 2 angeordnet und misst somit die vorgegebene Fußbodentemperatur. Der Infrarot-Temperatursensor 5 wird zur Steuerung der zugeordneten Infrarotflächenheizstrahler (1, hier nicht dargestellt) verwendet, um ein Überschreiten einer vorgegebenen Fußbodentemperatur zu verhindern bzw. um eine Einhaltung einer vorgegebenen Fußbodentemperatur zu gewährleisten.

Zusätzlich oder alternativ dazu ist ein Infrarotflächenheizstrahler (1, hier nicht gezeigt) mit einem zugeordneten Abstandssensor 6 gekoppelt. Der Abstandssensor 6 ist messtechnisch in Richtung des Fußbodens ausgerichtet.

Pro Sitz 2 ist ein Abstandssensor 6 vorgesehen, der zur Steuerung des zugeordneten Infrarotflächenheizstrahlers (1, nicht dargestellt) des Sitzes 2 verwendet wird. Durch den Sensor 6 wird der Heizbetrieb unter dem Sitz 2 unterbunden oder reduziert, sobald ein Gepäckstück unter den Sitz 2 geschoben wird.

FIG 4 zeigt mit Bezug auf FIG 2 und FIG 3 ein alternatives Detail der erfindungsgemäßen Anordnung.

Zur Lage des Infrarot-Temperatursensor (5) wird an dieser Stelle auf die FIG 3 verwiesen.

In einer Alternative zu FIG 3 sind hier zugeordnete Infrarotflächenheizstrahler (1, hier nicht gezeigt) von zwei benachbarten Sitzen 2 mit einem zugeordneten Abstandssensor 6 gekoppelt, der hier mittig zwischen den beiden benachbarten Sitzen 2 angeordnet ist.

Der Abstandssensor 6 ist messtechnisch in Richtung des Fußbodens ausgerichtet und dient zur Steuerung der zugeordneten Infrarotflächenheizstrahler (1, nicht dargestellt) der beiden benachbarten Sitze 2. Durch den Sensor 6 wird der Heizbetrieb unter den beiden benachbarten Sitzen 2 unterbunden oder reduziert, sobald ein Gepäckstück unter den Sitzen 2 geschoben und dort detektiert wird.

## Patentansprüche

1. Anordnung zur Beheizung eines Fußbodens,
- mit einem Schienenfahrzeug-Innenraum (3), der Sitze (2) für Fahrgäste und einen Fußboden aufweist, und
- mit Infrarotflächenheizstrahlern (1),
- bei der ausgewählte Sitze (2) des Innenraums einen Infrarotflächenheizstrahler (1) aufweisen,
- bei der die Infrarotflächenheizstrahler (1) derart ausgerichtet sind, dass durch die abgegebene Infrarotstrahlung der Fußboden beheizt wird, **dadurch gekennzeichnet, dass**
- ausgewählte Infrarotflächenheizstrahler (1) mit zugeordneten Abstandssensoren (6) gekoppelt sind,
- die Abstandssensoren (6) an den jeweiligen Sitzen angeordnet sind,
- wobei der jeweilige Sensor (6) zur Steuerung des zugeordneten Infrarotflächenheizstrahler (1) verwendet wird, so dass ein Heizbetrieb unterbunden oder reduziert wird, sobald ein Gepäckstück unter den Sitz (2) des zugeordneten Infrarotflächenheizstrahlers (1) geschoben wird.

2. Anordnung nach Anspruch 1, bei der die Infrarotflächenheizstrahler (1) als Glaskonvektor ausgebildet sind.

3. Anordnung nach Anspruch 1, bei der die Infrarotflächenheizstrahler (1) in das Design der Sitze (2) integriert sind.

4. Anordnung nach Anspruch 3, bei der die Infrarotflächenheizstrahler (1) an der Sitzunterseite als Bestandteil des Sitzes (2) integriert angeordnet sind.

5. Anordnung nach Anspruch 4, bei der die Infrarotflächenheizstrahler (1) an der Sitzunterseite als Bestandteil des Sitzes (2) derart integriert angeordnet sind, dass die Infrarotflächenheizstrahler im Betrieb von einem Fahrgast nicht gesehen werden.

6. Anordnung nach Anspruch 1, bei der ausgewählte Infrarotflächenheizstrahler (1) mit zugeordneten Infrarot-Temperatursensoren (5) gekoppelt sind, wobei dieser Sensor zur Steuerung des zugeordneten Infrarotflächenheizstrahler verwendet wird, um ein Überschreiten einer vorgegebenen Fußbodentemperatur zu verhindern bzw. um eine Einhaltung einer vorgegebenen Fußbodentemperatur zu gewährleisten.

## Claims

1. Arrangement for heating a floor,
- comprising a rail vehicle interior compartment (3), which has seats (2) for passengers and a floor, and
- comprising infrared radiant heater panels (1),
- in which selected seats (2) of the interior compartment have an infrared radiant heater panel (1),
- in which the infrared radiant heater panels (1) are aligned in such a way that the floor is heated by the infrared radiation that is emitted, **characterized in that**
- selected infrared radiant heater panels (1) are coupled to assigned distance sensors (6),
- the distance sensors (6) are arranged on the respective seats (2),
- wherein the respective sensor (6) is used for controlling the assigned infrared radiant heater panel (1), so that heating operation is prevented or reduced as soon as a piece of luggage is pushed under the seat (2) of the assigned infrared radiant heater panel (1).

2. Arrangement according to Claim 1, in which the infrared radiant heater panels (1) are designed as glass convectors.

3. Arrangement according to Claim 1, in which the infrared radiant heater panels (1) are integrated in the design of the seats (2).

4. Arrangement according to Claim 3, in which the infrared radiant heater panels (1) are arranged such that they are integrated on the underside of the seat as part of the seat (2) .

5. Arrangement according to Claim 4, in which the infrared radiant heater panels (1) are arranged such that they are integrated on the underside of the seat as part of the seat (2) in such a way that the infrared radiant heater panels are not seen in the area of a passenger.

6. Arrangement according to Claim 1, in which selected infrared radiant heater panels (1) are coupled to assigned infrared temperature sensors (5), wherein the sensor is used for controlling the assigned infrared radiant heater panel in order to prevent that a predetermined floor temperature is exceeded or in order to ensure that a predetermined floor temperature is maintained.

## Revendications

1. Ensemble permettant de chauffer un plancher,
- avec un espace intérieur de véhicule ferroviaire (3), qui présente des sièges (2) pour des passagers et un plancher, et
- avec des dispositifs de chauffage de surface par rayonnement infrarouge (1),
- dans lequel des sièges choisis (2) de l'espace intérieur présentent un dispositif de chauffage de surface par rayonnement infrarouge (1),
- dans lequel les dispositifs de chauffage de surface par rayonnement infrarouge (1) sont orientés de telle sorte que le plancher est chauffé par le rayonnement infrarouge émis, **caractérisé en ce que**,
- les dispositifs de chauffage de surface par rayonnement infrarouge (1) choisis sont couplés à des capteurs de distance (6) associés,
- les capteurs de distance (6) sont agencés sur les sièges respectifs (2),
- dans lequel le capteur (6) respectif est utilisé afin de commander le dispositif de chauffage de surface par rayonnement infrarouge(1) associé, de sorte qu'un fonctionnement de chauffage est empêché ou réduit dès qu'un bagage est glissé sous le siège (2) du dispositif de chauffage de surface par rayonnement infrarouge (1) associé.

2. Ensemble selon la revendication 1, dans lequel les dispositifs de chauffage de surface par rayonnement infrarouge (1) sont réalisés sous la forme de convecteurs en verre.

3. Ensemble selon la revendication 1, dans lequel les dispositifs de chauffage de surface par rayonnement infrarouge (1) sont intégrés dans la conception des sièges (2).

4. Ensemble selon la revendication 3, dans lequel les dispositifs de chauffage de surface par rayonnement infrarouge (1) sont disposés de manière intégrée sur la face inférieure du siège en tant que partie intégrante du siège (2).

5. Ensemble selon la revendication 4, dans lequel les dispositifs de chauffage de surface par rayonnement infrarouge (1) sont disposés de manière intégrée sur la face inférieure du siège en tant que partie intégrante du siège (2) de telle sorte que les dispositifs de chauffage de surface par rayonnement infrarouge ne soient pas vus par un passager pendant un fonctionnement.

6. Ensemble selon la revendication 1, dans lequel des dispositifs de chauffage de surface par rayonnement infrarouge (1) choisis sont couplés à des capteurs de température infrarouges (5) associés, ce capteur étant utilisé afin de commander le dispositif de chauffage de surface par rayonnement infrarouge associé afin d'empêcher un dépassement d'une température de plancher prédéterminée ou afin d'assurer le respect d'une température de plancher prédéterminée.
